# FASCICULE DE BREVET EUROPEEN

(11) **EP 1 866 120 B1**
(45) Date de publication et mention de la délivrance du brevet: **02.05.2012**
(21) Numéro de dépôt: 06726288.1
(22) Date de dépôt: 30.03.2006
(51) Int. Cl.: B23D 31/00

(54) **DISPOSITIF DE CASSAGE DE BIELLES SECABLES ET PROCEDE ASSOCIE**
VORRICHTUNG ZUM BRECHEN BRECHBARER STÄBE UND ENTSPRECHENDES VERFAHREN
DEVICE FOR BREAKING BREAKABLE RODS AND ASSOCIATED METHOD

(30) Priorité: 30.03.2005 FR 0503094
(43) Date de publication de la demande: 19.12.2007
(73) Titulaire: Renault s.a.s., 92100 Boulogne Billancourt (FR)
(72) Inventeur: VASSEUR, Philippe, F-27930 Normanville (FR)
(86) Numéro de dépôt international: PCT/FR2006/050274
(87) Numéro de publication internationale: WO 2006/103373

(56) Documents cités:
- EP-A- 0 507 519
- EP-A- 0 713 741
- EP-A- 1 036 622
- US-A- 4 569 109
- US-A- 5 131 577
- US-A- 5 320 265

## Description

L'invention concerne le domaine des méthodes de fabrication de bielles sécables et des outillages associés. Un dispositif ayant les caractéristiques du préambule de la revendication 1 et le procédé associé sont décrits dans le EP-A-713 741

Un procédé bien connu consiste à casser intentionnellement une bielle de moteur selon un plan sensiblement médian de l'alésage destiné à recevoir un vilebrequin et perpendiculairement au bras de la bielle. La partie cassée est le chapeau de la bielle en forme d'anneau demi-circulaire.

Un tel procédé offre l'avantage que la recombinaison du chapeau sur le corps de bielle est quasi parfaite, en raison des arrachements irréguliers dus à la rupture. La maîtrise du lieu de rupture se fait par des amorces de fractures préparées dans la tête de bielle.

Le brevet US 4 569 109 décrit un outillage connu pour réaliser une telle rupture. Cet outillage comprend deux blocs semi-cylindriques qui se déplacent latéralement par une rampe inclinée, et permettent d'écarter les bords de l'alésage et de casser la bielle.

Des améliorations du procédé ont été décrites par, notamment, la demande de brevet EP 0 507 519, ainsi que par les brevets US 5 320 265, et US 5 131 577, qui tous décrivent un procédé où un outillage en deux parties pénètre dans l'alésage à casser. Puis, on écarte les deux parties dans le sens du bras de la bielle.

De telles solutions présentent toutes l'inconvénient de provoquer des déformations permanentes de l'alésage de la bielle, qui persistent après rupture, provoquant ainsi de nombreux rebuts. En effet, l'alésage tend notamment à s'allonger selon une forme elliptique dont le grand axe correspond à l'axe du bras de la bielle. La paroi de l'alésage étant généralement plus fine du côté du chapeau que du côté du bras, les extrémités du chapeau sont plus rétrécies après rupture que les extrémités correspondantes du bras de la bielle. Ce type de déformation est particulièrement gênant pour le remontage du chapeau sur le corps de bielle.

Le document EP1036622 propose un outillage pour casser une pièce par rupture comportant un demi mandrin et deux pistons formant entre eux un angle compris entre 80 et 140 degrés. Ce document propose d'améliorer le cassage, mais il ne cherche pas à empêcher les déformations au cassage.

L'invention propose un procédé et un outillage de cassage de bielles destinées à être ré-assemblées après cassage, qui réduit fortement les déformations du chapeau de bielle, et notamment réduit le rétrécissement des extrémités du chapeau de bielle.

Le dispositif selon l'invention est décrit dans la revendication 1 et 2 comporte un bloc longitudinal fixe, un bloc longitudinal mobile et deux blocs latéraux, le tenon présente au moins trois cotés inclinés, un coté longitudinal coopérant avec un coté incliné du bloc longitudinal mobile, et deux cotés latéraux coopérant chacun avec un des cotés inclinés de chacun des blocs latéraux, la direction du coté longitudinal formant un angle avec chacune des directions desdits deux côtés latéraux, de préférence un angle de sensiblement 90 °.

Avantageusement, l'angle d'inclinaison du côté longitudinal est entre 5 et 15 fois supérieur aux angles d'inclinaison des côtés latéraux.

Selon une caractéristique, le tenon présente des côtés inclinés, coopérant avec lesdits blocs latéraux, décalés axialement par rapport à ceux des côtés inclinés qui coopèrent avec les blocs longitudinaux de manière qu'un mouvement latéral des blocs latéraux précède un mouvement longitudinal du bloc longitudinal mobile.

Selon une autre caractéristique, le dispositif comprend des butées d'alignement aptes à coopérer avec un bras de bielle sécable de manière que les blocs latéraux coïncident avec une partie chapeau de la bielle, au voisinage des amorces de fracture de la bielle. Le dispositif peut comprendre un moyen de soufflage des particules crées lors du cassage de la bielle.

Le procédé selon l'invention est décrit dans la revendication 7*.* Selon ce mode de réalisation de procédé de cassage de bielle sécable, ladite bielle comprend une tête de bielle comportant un alésage, un corps en forme de bras s'étendant à partir de la tête de bielle, ladite tête de bielle comportant des amorces de fractures définissant un plan de fracture sensiblement perpendiculaire à l'axe du bras, et le procédé comporte les étapes suivantes :
- placer la tête d'une bielle non cassée sur un dispositif de cassage comprenant un ensemble d'au moins trois blocs,
- orienter angulairement le bras de la bielle de manière à ce qu'au moins deux blocs soient en vis-à-vis d'une partie chapeau de la tête de bielle, et qu'au moins un bloc soit en vis-à-vis du bras,
- exercer un effort d'écartement des blocs dans des directions dont au moins deux présentent entre elles un angle, et avec une intensité suffisante pour provoquer la rupture des amorces de factures.

Le procédé de cassage comprend l'étape de :
- placer la tête d'une bielle non cassée sur un dispositif de cassage comprenant un ensemble de deux blocs longitudinaux et de deux blocs latéraux,
- orienter angulairement le bras de la bielle de manière à ce que les blocs longitudinaux soient sensiblement alignés avec l'axe du bras, et les deux blocs latéraux soient sensiblement symétriques par rapport à l'axe du bras et en vis à vis du chapeau de la bielle,
- exercer un effort d'écartement des deux blocs latéraux,
- exercer un effort d'écartement des deux blocs longitudinaux avec une intensité suffisante pour provoquer la rupture des amorces de factures.

Selon une caractéristique du procédé, l'intensité de l'effort de l'écartement des blocs latéraux est sensiblement constante pendant l'étape d'écartement des blocs longitudinaux.

Selon une autre caractéristique du procédé, l'intensité d'effort d'écartement des blocs latéraux est variable et évolue concomitamment à l'étape d'écartement des blocs longitudinaux.

D'autres caractéristiques et avantages de l'invention apparaîtront à la lecture de la description détaillée de quelques modes de réalisation pris à titre d'exemples non limitatifs illustrés par les dessins annexés, sur lesquels :
- la figure 1 est une coupe vue de dessus d'un premier mode de réalisation du dispositif selon l'invention, agencé avec une bielle sécable,
- la figure 2 est une coupe du dispositif selon le plan II-II de la figure 1 en position rétractée, une position écartée étant indiquée en pointillés,
- la figure 3 est une coupe partielle du dispositif en position rétractée selon le plan III-III de la figure 2,
- la figure 4 est une coupe du dispositif selon le plan IV-IV de la figure 1,
- la figure 5 est une coupe partielle du dispositif en position rétractée selon le plan V-V de la figure 4,
- la figure 6 est une coupe du dispositif en position rétractée selon le plan VI-VI de la figure 5,
- la figure 7 est une coupe partielle du dispositif en position écartée selon le plan V-V de la figure 4,

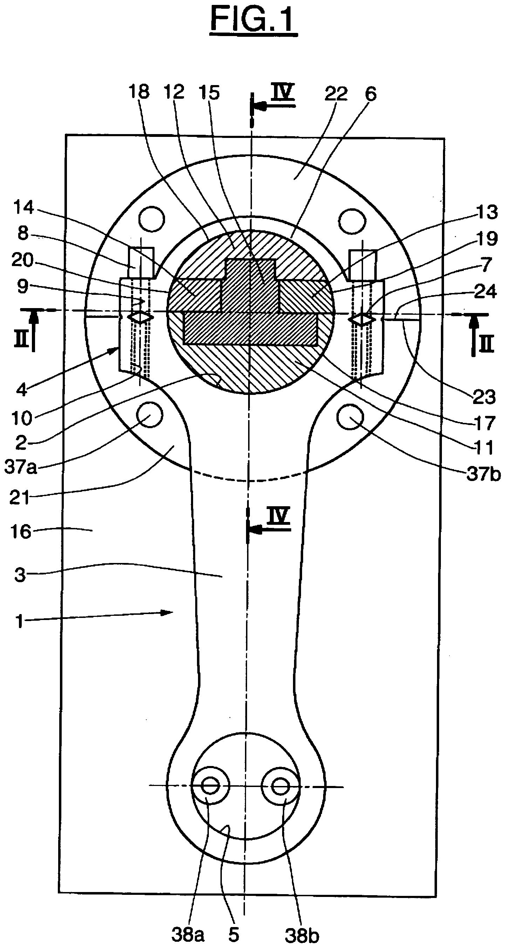

Comme illustré sur la figure 1, le dispositif de ce mode de réalisation est destiné à casser une bielle sécable 1. Cette bielle comprend un alésage de vilebrequin 2, un bras 3 s'étendant radialement à partir de la tête de bielle 4 et permettant de relier un alésage de piston 5 parallèle à l'alésage de vilebrequin 2. Cette bielle sécable comporte des amorces de fracture 7 selon un plan méridien de l'alésage de vilebrequin 2 sensiblement perpendiculaire à l'axe du bras 3, définissant ainsi un plan de fracture séparant un chapeau de bielle 6 du reste de la bielle.

Une fois cassée, cette bielle sécable est destinée à être recombinée, de manière connue, au moyen par exemple d'une vis 8 traversant un alésage de chapeau 9 et vissée dans un filetage du bras 10.

Le dispositif de cassage de la bielle sécable 1 comprend un bloc longitudinal fixe 11, un bloc longitudinal mobile 12, un bloc latéral droit 13, un bloc latéral gauche 14, un tenon 15 et un support 16. Les blocs 11, 12, 13 et 14 comprennent chacun une portion cylindrique, respectivement 17, 18, 19 et 20, de même rayon.

Les blocs longitudinaux 11 et 12 sont munis chacun d'une partie formant un socle, respectivement 21 et 22, comprenant chacun une surface de guidage, respectivement 23 et 24, complémentaires et en contact l'une avec l'autre lorsque le dispositif est, comme illustré sur la figure 1, en position rétractée. Grâce à ces surfaces de guidage 23 et 24, les axes des portions cylindriques 17 et 18 des blocs longitudinaux 11 et 12 coïncident sensiblement.

En position rétractée, les quatre portions cylindriques définissent un cylindre circonscrit de rayon sensiblement égal aux rayons des portions cylindriques légèrement inférieurs au rayon de l'alésage de vilebrequin 2.

Par portion cylindrique, on peut également entendre des portions en forme de tonneau, de sorte que l'ensemble des quatre blocs longitudinaux forme en position rétractée une forme de tonneau susceptible de recevoir l'alésage du vilebrequin en étant bien ajustée en diamètre, mais permettant un désalignement du bras de la bielle par rapport à la perpendiculaire à l'axe du dispositif. Une telle forme en tonneau est particulièrement utile pour faciliter l'opération d'insertion de la tête de bielle autour de l'ensemble des blocs du dispositif, sans provoquer d' arc-boutement.

Le socle 21 du bloc longitudinal fixe 11 est fixé par des moyens de fixation 37a et 37b sur le support 16. Des butées d'alignement 38a et 38b sont également fixées sur le support 16, de manière à ce que, lorsque l'alésage de piston 5 est positionné par les butées d'alignement 38a et 38b, le bloc longitudinal fixe 11 coïncide avec l'alésage du vilebrequin 2 et est dans une orientation telle que la portion cylindrique 17 du bloc longitudinal fixe 11 couvre quasiment la totalité de la portion de l'alésage du vilebrequin 2 destinée à rester avec le bras de la bielle 3.

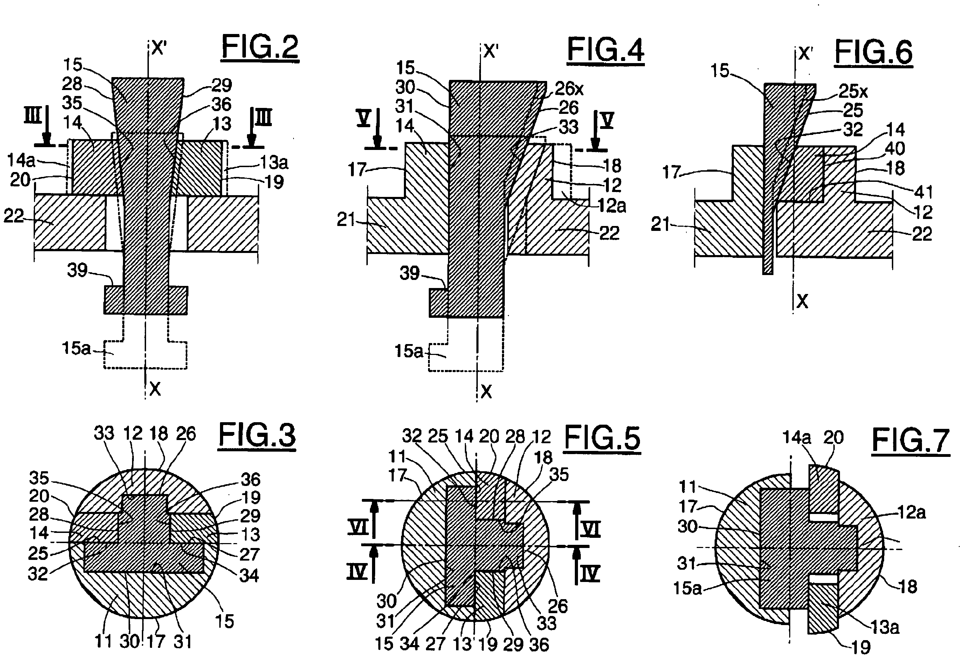

Comme illustré sur les figures 2 à 7, la portion cylindrique 17 du bloc longitudinal fixe 11 est sensiblement demi-cylindrique, le tenon 15 est muni de trois côtés inclinés longitudinaux 25, 26 et 27, de deux côtés inclinés latéraux 28 et 29, et d'un côté droit 30 coopérant avec un côté droit complémentaire 31 appartenant au bloc fixe 11.

Les côtés longitudinaux inclinés 25, 26 et 27 du tenon 15 sont parallèles et coopèrent respectivement avec un côté incliné 32 du bloc latéral gauche 14, un côté incliné 33 du bloc longitudinal 12 et un côté incliné 34 du bloc latéral droit 13. Ces trois côtés sont parallèles et sont caractérisés par un angle d'inclinaison et une direction d'inclinaison. L'angle d'inclinaison est l'angle que forme l'axe X-X' avec le plan des côtés. Et la direction d'inclinaison est caractérisée par la projection d'une droite normale au côté sur le plan normal à l'axe X-X'. La direction d'inclinaison commune aux côtés 25, 26 et 27 est sensiblement perpendiculaire au méridien de la surface demi-sphérique 17.

Les côtés latéraux 28 et 29 du tenon coopèrent respectivement avec un côté latéral 35 du bloc latéral gauche 14 et un côté latéral 36 du bloc latéral droit 13. Les directions des côtés latéraux du tenon forment un angle de sensiblement 90° par rapport à la direction des côtés longitudinaux du tenon.

On va maintenant détailler le mécanisme d'écartement des blocs 12, 13 et 14 par rapport au bloc longitudinal fixe 11. Lorsque le dispositif est en position écartée, les blocs 12, 13, 14 prennent respectivement les positions 12a, 13a, 14a.

L'ensemble des blocs 11, 12, 13 et 14 forment ensemble une mortaise traversée par le tenon 15 le long de l'axe XX' du dispositif. Le tenon présente un crochet 39 permettant de tirer le tenon 15 dans la direction de l'axe XX'. Les côtés inclinés 28, 29, 35, 36 étant perpendiculaires à la figure 2, l'effort de pression du tenon sur les blocs 13 et 14 provoque un déplacement de ces blocs 13 et 14 dans une direction latérale par rapport au bras de la bielle 3 pour atteindre les positions 13a et 14a indiquées en figures 2 et 7.

Le bloc latéral gauche 14 est en appui sur le bloc longitudinal 12 par un côté 40 parallèle à l'axe X-X' et perpendiculaire à la direction longitudinale. Le bloc latéral gauche 14 est également en appui sur la partie 22 formant un socle du bloc longitudinal 12 par une surface 41. Il en est de même pour le bloc latéral droit 13. Les blocs latéraux 13 et 14 contribuent à transmettre l'effort d'écartement du tenon 15 au bloc longitudinal 12. Ainsi, l'effort d'écartement longitudinal du bloc mobile 12 par rapport au bloc fixe 11 est réparti sur les trois côtés inclinés 25, 26 et 27. Les surfaces de guidage 40, les surfaces d'appui 41 et les côtés inclinés 35 et 32 du bloc latéral gauche 14 sont particulièrement lubrifiés de manière à autoriser un glissement latéral provoqué par les rampes 28 et 35.

Comme illustré sur les figures 2 et 4, le déplacement latéral des blocs 13 et 14 a lieu concomitamment avec le déplacement longitudinal du bloc mobile 12.

Dans une variante, les côtés inclinés longitudinaux indiqués 26x, 27x et 28x en pointillés sur la figure 4 sont décalés axialement par rapport aux côtés inclinés 28 et 29. Ainsi, lors du déplacement du tenon 15, les blocs latéraux 13 et 14 se déplacent en premier jusqu'à exercer un premier niveau de précontrainte, puis les côtés inclinés 26x, 27x et 28x interviennent à leur tour et ce jusqu'à la rupture des amorces de fracture 7.

Les angles des inclinaisons longitudinale et latérale sont fonction du matériau de la bielle sécable ainsi que de la forme de la tête de bielle.

Dans un mode particulier de réalisation, l'angle d'inclinaison longitudinale est entre 5 et 15 fois supérieur à l'angle d'inclinaison latérale, la course de déplacement du bloc longitudinal 12 est de l'ordre de 5 mm tandis que la course de déplacement des blocs latéraux est de l'ordre de 0,3 à 0,5 mm chacun.

Ce mode de réalisation permet une mise au point rapide du procédé car les paramètres réglés par chacun de ces plans inclinés sont indépendants les uns des autres.

Le dispositif et le procédé selon l'invention présentent un avantage important par rapport aux documents de l'art antérieur, notamment pour le cassage des bielles qui sont dites à chapeaux minces, car ils sont sujets à des déformations plus importantes lors de l'opération de cassage. Les chapeaux sont dits minces lorsque le rapport entre la section centrale du chapeau et la somme des sections de cassage (hors passage de vis) est inférieur à 0,75.

## Revendications

1. Dispositif de cassage de bielle sécable (1) comprenant un tenon (15) et un ensemble de plusieurs blocs (11, 12, 13, 14) comportant chacun une portion cylindrique (17,18,19,20) de même rayon, lesdits blocs étant montés de façon à pouvoir occuper une position écartée et une position rétractée dans laquelle les axes des portions cylindriques coïncident et définissent l'axe du dispositif, l'ensemble étant traversé, selon l'axe du dispositif, par une mortaise recevant le tenon (15), lequel tenon (15) présente des côtés (25,26,27,28,29,30) dans différentes directions autour de l'axe, et coopérant avec des côtés (32,33,34,35,36,31) complémentaires de chaque bloc, **caractérisé par le fait qu'**il comporte un bloc longitudinal fixe (11), un bloc longitudinal mobile (12) et deux blocs latéraux (13,14), le tenon (15) présente au moins trois cotés inclinés (26,28,29) par rapport à l'axe du dispositif, un coté longitudinal (26) coopérant avec un coté incliné (33) du bloc longitudinal mobile (12), et deux cotés latéraux (28,29) coopérant chacun avec un des cotés inclinés (35,36) de chacun des blocs latéraux (14,13), la direction du coté longitudinal (26) formant un angle avec chacune des directions desdits deux côtés latéraux (28,29).

2. Dispositif selon la revendication 1, **caractérisé par le fait que** l'angle du côté longitudinal (26) avec au moins un desdits côtés latéraux (28, 29) est de 90°.

3. Dispositif selon la revendication 2, **caractérisé par le fait que** l'angle d'inclinaison du côté longitudinal est entre 5 et 15 fois supérieur aux angles d'inclinaison des côtés latéraux.

4. Dispositif selon la revendication 2 ou 3, **caractérisé par le fait que** le tenon (15) présente des côtés inclinés (28,29), coopérant avec lesdits blocs latéraux (14,13), décalés axialement par rapport à ceux des côtés inclinés (25x, 26x) qui coopèrent avec les blocs longitudinaux (12) de manière qu'un mouvement latéral des blocs latéraux (14,13) précède un mouvement longitudinal du bloc longitudinal mobile (12).

5. Dispositif selon l'une des revendications 2 à 4, **caractérisé par le fait qu'**il comprend des butées d'alignement (38a,38b) aptes à coopérer avec un bras (3) de bielle sécable (1) de manière que les blocs latéraux (14,13) coïncident avec une partie chapeau de la bielle, au voisinage des amorces (7) de fracture de la bielle (1).

6. Dispositif selon l'une des revendications précédentes, **caractérisé par le fait qu'**il comprend un moyen de soufflage des particules crées lors du cassage de la bielle.

7. Procédé de cassage de bielle sécable, ladite bielle comprenant une tête de bielle comportant un alésage (2), un corps en forme de bras (3) s'étendant à partir de la tête de bielle (4), ladite tête de bielle (4) comportant des amorces de fractures (7) définissait un plan de fracture sensiblement perpendiculaire à l'axe du bras (3), le procédé comportant les étapes suivantes :
- placer la tête d'une bielle (4) non cassée sur un dispositif de cassage comprenant un bloc longitudinal fixe (11), un bloc longitudinal mobile (12) et de deux blocs latéraux (13,14),
- orienter angulairement le bras (3) de la bielle de manière à ce que les blocs longitudinaux (11, 12) soient sensiblement alignés avec l'axe du bras (3), et les deux blocs latéraux (13, 14) soient sensiblement symétriques par rapport à l'axe du bras (3) et en vis à vis du chapeau (6) de la bielle,
- exercer un effort d'écartement des deux blocs latéraux (13, 14),
- exercer un effort d'écartement longitudinal du bloc mobile (12) par rapport au bloc fixe (11) avec une intensité suffisante pour provoquer la rupture des amorces de factures (7).

8. Procédé selon la revendication 7 **caractérisé par le fait que** l'intensité de l'effort de l'écartement des blocs latéraux (13,14) est sensiblement constante pendant l'étape d'écartement des blocs longitudinaux (11,12).

9. Procédé selon la revendication 7, **caractérisé par le fait que** l'intensité d'effort d'écartement des blocs latéraux (13,14) est variable et évolue concomitamment à l'étape d'écartement des blocs longitudinaux (11,12).

## Claims

1. Device for breaking breakable connecting rods (1) comprising a tenon (15) and a set of several blocks (11, 12, 13, 14) each comprising a cylindrical portion (17, 18, 19, 20) of the same radius, the said blocks being mounted in such a way that they can occupy a separated position and a retracted position in which the axes of the cylindrical portions coincide and define the axis of the device, the assembly having passing through it, along the axis of the device, a mortise that accommodates the tenon (15), which tenon (15) has sides (25, 26, 27, 28, 29, 30) in different directions about the axis and which collaborate with complimentary sides (32, 33, 34, 35, 36, 31) of each block, **characterized in that** it comprises a fixed longitudinal block (11), a moving longitudinal block longitudinal block (11), a moving longitudinal block (12) and two lateral blocks (13, 14), the tenon (15) has at least three sides (26, 28, 29) that are inclined with respect to the axis of the device, one longitudinal side (26) collaborating with one inclined side (33) of the moving longitudinal block (12), and two lateral sides (28, 29) each collaborating with one of the inclined sides (35, 36) of each of the lateral blocks (14, 13), the direction of the longitudinal side (26) making an angle with each of the directions of the said two lateral sides (28, 29).

2. Device according to Claim 1, **characterized in that** the angle of the longitudinal side (26) with at least one of the said lateral sides (28, 29) is 90°.

3. Device according to Claim 2, **characterized in that** the angle of inclination of the longitudinal side is between 5 and 15 times greater than the angles of inclination of the lateral sides.

4. Device according to Claim 2 or 3, **characterized in that** the tenon (15) has inclined sides (28, 29), collaborating with the said lateral blocks (14, 13), which are axially offset with respect to those of the inclined sides (25x, 26x) which collaborate with the longitudinal blocks (12) so that a lateral movement of the lateral blocks (14, 13) precedes a longitudinal movement of the moving longitudinal block (12).

5. Device according to one of Claims 2 to 4, **characterized in that** it comprises alignment end stops (38a, 38b) able to collaborate with a breakable connecting rod (1) shank (3) so that the lateral blocks (14, 13) coincide with a cap part of the connecting rod, near the rupture initiators (7) of the connecting rod (1).

6. Device according to one of the preceding claims, **characterized in that** it comprises a means of blowing the particles created when the connecting rod breaks.

7. Method for breaking a breakable connecting rod, the said connecting rod comprising a big end comprising a bore (2), a body in the form of a shank (3) extending from the big end (4), the said big end (4) comprising rupture initiators (7) defining a fracture plane substantially perpendicular to the axis of the shank (3), the method comprising the following steps:
- placing the unbroken big end (4) on a breaking device comprising a fixed longitudinal block (11), a moving longitudinal block (12) and two lateral blocks (13, 14),
- angularly orientating the shank (3) of the connecting rod in such a way that the longitudinal blocks (11, 12) are substantially aligned with the axis of the shank (3) and the two lateral blocks (13, 14) are substantially symmetric with respect to the axis of the shank (3) and facing the connecting rod can (6),
- applying a force to separate the two lateral blocks (13, 14),
- applying a force to separate the moving block (12) longitudinally from the fixed block (11) with sufficient intensity to cause the rupture initiators (7) to fracture.

8. Method according to Claim 7, **characterized in that** the intensity of the force for separating the literal blocks (13, 14) is substantially constant during the step of separating the longitudinal blocks (11, 12).

9. Method according to Claim 7, **characterized in that** the intensity of the force for separating the lateral blocks (13, 14) is variable and evolves concomitantly during the step of separating the longitudinal blocks (11, 12).

## Patentansprüche

1. Vorrichtung zum Brechen einer teilbaren Pleuelstange (1), die einen Zapfen (15) und eine Einheit von mehreren Blöcken (11, 12, 13, 14) enthält, die jeder einen zylindrischen Teil (17, 18, 19, 20) mit gleichem Radius aufweisen, wobei die Blöcke so montiert sind, dass sie eine abgespreizte Stellung und eine eingezogene Stellung einnehmen können, in der die Achsen der zylindrischen Teile zusammenfallen und die Achse der Vorrichtung definieren, wobei die Einheit gemäß der Achse der Vorrichtung von einem den Zapfen (15) aufnehmenden Zapfenloch durchquert wird, wobei der Zapfen (15) Seiten (25, 26, 27, 28, 29, 30) in unterschiedliche Richtungen um die Achse aufweist und mit komplementären Seiten (32, 33, 34, 35, 36, 31) jedes Blocks zusammenwirkt, **dadurch gekennzeichnet, dass** sie einen ortsfesten Längsblock (11), einen beweglichen Längsblock (12) und zwei seitliche Blöcke (13, 14) aufweist, wobei der Zapfen (15) mindestens drei bezüglich der Achse der Vorrichtung geneigte Seiten (26, 28, 29) hat, wobei eine Längsseite (26) mit einer geneigten Seite (33) des beweglichen Längsblocks (12) zusammenwirkt, und zwei seitliche Seiten (28, 29) je mit einer der geneigten Seiten (35, 36) jedes der seitlichen Blöcke (14, 13) zusammenwirken, wobei die Richtung der Längsseite (26) einen Winkel mit jeder der Richtungen der zwei seitlichen Seiten (28, 29) bildet.

2. Vorrichtung nach Anspruch 1, **dadurch gekennzeichnet, dass** der Winkel der Längsseite (26) mit mindestens einer der seitlichen Seiten (28, 29) 90° beträgt.

3. Vorrichtung nach Anspruch 2, **dadurch gekennzeichnet, dass** der Neigungswinkel der Längsseite 5 bis 15 Mal größer ist als die Neigungswinkel der seitlichen Seiten.

4. Vorrichtung nach Anspruch 2 oder 3, **dadurch gekennzeichnet**, das der Zapfen (15) geneigte Seiten (28, 29) hat, die mit den seitlichen Blöcken (14, 13) zusammenwirken, die axial bezüglich derjenigen der geneigten Seiten (25x, 26x) versetzt sind, die mit den Längsblöcken (12) zusammenwirken, so dass eine seitliche Bewegung der seitlichen Blöcke (14, 13) einer Längsbewegung des beweglichen Längsblocks (12) vorausgeht.

5. Vorrichtung nach einem der Ansprüche 2 bis 4, **dadurch gekennzeichnet, dass** sie Ausrichtungsanschläge (38a, 38b) aufweist, die mit einem Arm (3) einer teilbaren Pleuelstange (1) so zusammenwirken, können, dass die seitlichen Blöcke (14, 13) mit einem Deckelbereich der Pleuelstange in der Nähe der Brechanrisse (7) der Pleuelstange (1) zusammenfallen.

6. Vorrichtung nach einem der vorhergehenden Anspruche, **dadurch gekennzeichnet, dass** sie eine Einrichtung zum Blasen der beim Brechen der Pleuelstange erzeugten Partikel enthält.

7. Verfahren zum Brechen einer teilbaren Pleuelstange, wobei die Pleuelstange einen Pleuelstangenkopf mit einer Bohrung (2) und einen Körper in Form eines Arms (3) aufweist, der sich ausgehend von dem Pleuelstangenkopf (4) erstreckt, wobei der Pleuelstangenkopf (4) Brechanrisse (7) aufweist, die eine Blechebene im Wesentlichen lotrecht zur Achse des Arms (3) definieren, wobei das Verfahren die folgenden Schritte aufweist:
- Anordnen des Kopfes einer nicht gebrochenen Pleuelstange (4) auf einer Brechvorrichtung, die einen ortsfesten Längsblock (11), einen beweglichen Längsblock (12) und zwei seitliche Blöcke (13, 14) enthalt,
- winkelmäßiges Ausrichten des Arms (3) der Pleuelstange, damit die Längsblöcke (11, 12) im Wesentlichen mit der Achse des Arms (3) fluchtend ausgerichtet sind, und die zwei seitlichen Blöcke (13, 14) bezüglich der Achse des Arms (3) im Wesentlichen symmetrisch sind und dem Deckel (6) der Pleuelstange gegenüberliegen,
- Ausüben einer Kraft zum Abspreizen der zwei seitlichen Blöcke (13, 14),
- Ausüben einer Längsspreizkraft des beweglichen Blocks (12) bezüglich des ortsfesten Blocks (11) mit einer ausreichenden Stärke, um das Brechen der Brechanrisse (7) zu bewirken.

8. Verfahren nach Anspruch 7, **dadurch gekennzeichnet, dass** die Stärke der Kraft des Abspreizens der seitlichen Blöcke (13, 14) während des Schritts des Abspreizens der Längsblöcke (11, 12) im Wesentlichen konstant ist.

9. Verfahren nach Anspruch 7, **dadurch gekennzeichnet, dass** die Stärke der Abspreizkraft der seitlichen Blöcke (13, 14) variabel ist und sich gleichzeitig mit dem Schritt des Abspreizens der Längsblöcke (11, 12) entwickelt.
